# EUROPEAN PATENT SPECIFICATION

(11) **EP 3 157 340 B1**
(45) Date of publication and mention of the grant of the patent: **12.12.2018**
(21) Application number: 15750452.3
(22) Date of filing: 10.04.2015
(51) Int. Cl.: A21D 2/36, A21D 13/02, A21D 13/062, A23L 7/10, A23L 33/21

(54) **FOOD FLOURS USEFUL IN THE REDUCTION OF GLYCEMIA, IN THE TREATMENT OF METABOLIC SYNDROME, IN THE REDUCTION OF CHOLESTEROL AND/OR IN THE TREATMENT OF TYPE 2 DIABETES**
SPEISEMEHLE ZUR REDUKTION VON GLYKÄMIE BEI DER BEHANDLUNG DES METABOLISCHEN SYNDROMS, ZUR SENKUNG DES CHOLESTERINSPIEGELS UND/ODER BEI DER BEHANDLUNG VON TYP-2-DIABETES
FARINES ALIMENTAIRES UTILES DANS LA RÉDUCTION DE LA GLYCÉMIE, DANS LE TRAITEMENT DU SYNDROME MÉTABOLIQUE, DANS LA RÉDUCTION DU CHOLESTÉROL ET/OU DANS LE TRAITEMENT DU DIABÈTE DE TYPE 2

(30) Priority: 11.04.2014 EP 14164385
(43) Date of publication of application: 26.04.2017
(73) Proprietor: New Life Hold S.r.L., 26841 Casalpusterlengo Lodi (IT)
(72) Inventor: VARVELLO, Franco, 27029 Vigevano (PV) (IT); VARVELLO, Francesca, 29121 Piacenza (PC) (IT)
(74) Representative: Casci, Tamara
(86) International application number: PCT/IB2015/052621
(87) International publication number: WO 2015/155743

(56) References cited:
- EP-B1- 1 758 470
- WO-A2-02/35945
- US-A1- 2011 244 073
- US-A1- 2012 230 955
- LU ZHONG X ET AL: "Arabinoxylan fiber, a byproduct of wheat flour processing, reduces the postprandial glucose response in normoglycemic subjects", THE AMERICAN JOURNAL OF CLINICAL NUTRITION, AMERICAN SOCIETY FOR NUTRITION, US, vol. 71, no. 5, 1 May 2000 (2000-05-01), pages 1123-1128, XP002482172, ISSN: 0002-9165
- ANNICA A.M. ANDERSSON ET AL: "Contents of dietary fibre components and their relation to associated bioactive components in whole grain wheat samples from the HEALTHGRAIN diversity screen", FOOD CHEMISTRY, vol. 136, no. 3-4, 1 February 2013 (2013-02-01), pages 1243-1248, XP055140086, ISSN: 0308-8146, DOI: 10.1016/j.foodchem.2012.09.074

## Description

### Technical field

The present invention relates to the food industry, in particular in the sector of food flours, and it refers to a food flour rich in immediately available soluble pentosans, among which arabinoxylans.

The present invention also refers to the use of the food flour of the invention in the reduction of postprandial glycemia in normoglycemic subjects, in the treatment of metabolic syndrome, in the reduction of cholesterol and in the treatment of type 2 diabetes.

### Background to the invention

The current well-established awareness of the importance of nutrition for human health, has drawn the attention of experts in the food sector towards food that has a positive influence on various physiological aspects of interest and on the well-being of human beings or animals in general. In particular, in recent years, operators in the field have become interested in so-called functional foods, i.e. foods for which physiological benefits and also adequate nutritional effects have been demonstrated, in addition to their usefulness in reducing the risk of illness, above all in the metabolic area.

In the field of flours, in particular wheat flours, the development of industrial mills to the detriment of artisan mills has led to the diffusion of a more refined flour, i.e. without the outer integuments of the caryopsis, in particular the wheat caryopsis.

The caryopsis, commonly known as grain, of wheat does in fact have a complex structure composed of various parts:
- outer integuments (pericarp, spermoderm, nucellar layer and aleurone layer), which all contribute to forming the bran which represents about 14% of the total weight of the caryopsis;
- endosperm (starch and proteins) or "mandorla amilifera": this part represents about 83% of the total weight of the caryopsis;
- embryo with scutellum or germ: this part represents about 3% of the total weight of the caryopsis.

A similar structure, albeit in varying proportions, is also true for other grains, in particular rye, buckwheat, rice, barley, oat, and corn.

At present, modern grinding technologies remove the outer integuments and germ of the grain, which therefore form the grinding by-products, in the production of refined flours. The most widely-used wheat flour (of the type 00 and 0), for example, is in fact exclusively composed of the grinding products obtained from the endosperm ("mandorla amilifera"), and is referred to as a refined or a white flour.

The expression "0 flour" is an Italian classification of refined soft wheat flour that corresponds to "all-purpose flour" according to the US classification. The expression "00 flour" is an Italian classification of refined soft wheat flour that corresponds to "pastry flour" according to the US classification.

Preferably, throughout this specification, the expressions "0 flour" and "00 flour" are used to mean any soft wheat flour that can be commercially classified as refined.

Eliminating the part of the outer integuments to obtain refined flour therefore represents a significant change in the eating habits of people who are nourished by this refined flours, which can have repercussions on their health.

Nutritional science in fact recommends replacing the white bread obtained with refined flours, with rustic bread prepared with whole flours.

The positive effect that bran and wholegrain cereals intake has on intestinal regularity and in preventing some diseases has been known for some time. Only recently, however, have various studies shown that these benefits cannot be exclusively attributed to the "drag and cleaning" effect that fibre-rich plants have, but also and above all to well-defined molecules which form these plant matrices.

Food fibre is made up of insoluble fibre, i.e. cellulose and lignin, which prevalently acts on the functioning of the gastrointestinal tract, favouring the "drag and cleaning" effect indicated above, as it favours the passage of food bolus in the intestine and evacuation of the feces.

Food fibre is also made up, however, of soluble fibre, primarily consisting of polysaccharide chains of arabinoxylans belonging to the family of pentosans and ferulic acid, an antioxidant molecule associated with the pentosan structures of grain bran, such as for example wheat bran.

The soluble fibre regulates the absorption of sugars and fats contributing to the control of the glucose and cholesterol level in the blood. The vast majority of pentosans, among which arabinoxylans, and ferulic acid present for example in wheat bran and in food fibre in general, is not bioavailable however, as it is strictly connected (or rather, bound) to other inert structures such as cellulose and lignin. It is this inability of the digestive system to break down these structures that has induced the pro-biotic intestinal microflora of the large intestine to produce hydrolytic enzymes which, in the presence of food fibre, separate pentosans and ferulic acid from the compounds to which they are bound, making them bioavailable. This process, however, is slow and, as it takes place only in the final part of the intestine, it has very low yields.

An *in vivo* study (Sandra M. Kern, Richard N. Bennett, Fred A. Mellon, Paul Anthony Kroon and Maria - Teresa Garcia-Conesa J., "Adsorption of Hydroxycinnamates in Humans after High-Bran Cereal Consumption" Agric. Food Chem. 2003, 51, 6050-6055) has shown that only 3% of the ferulic acid normally ingested with a breakfast of wheat having a high fibre content is rapidly absorbed.

In this respect, credited scientific opinion agrees that the pentosans and in particular arabinoxylans obtained from the endosperm of wheat, have an active role in reducing the postprandial glycemic response in normoglycemic subjects. In particular, these effects are observed with a consumption of 8 g of fibre rich in arabinoxylans deriving from the endosperm of wheat (at least 60% by weight of arabinoxylan) per 100 g of carbohydrates (EFSA Journal 2011; 9(6):2205). LU ZHONG X ET AL: "Arabinoxylan fiber, a byproduct of wheat flour processing, reduces the postprandial glucose response in normoglycemic subjects",THE AMERICAN JOURNAL OF CLINICAL NUTRITION, AMERICAN SOCIETY FOR NUTRITION 2000; 71(5) discloses a clinical trial wherein fasting subjects were provided a breakfast meal including white bread containing 0%, 7% and 14% arabinoxylan rich fibre. The peak postprandial glucose concentrations after meals containing the 7% and 14% arabinoxylan rich fibre breads were significantly lower than after the control meal.

Although these positive effects have been confirmed, it should be noted that the ingestion of a quantity of 8 g of fibre rich in arabinoxylans per 100 g of carbohydrates can lead to a series of disturbances such as swelling, bloating, irritation of the colon and consequent abdominal pain, due to the part of insoluble fibre contained in wheat bran.

Furthermore, the wholemeal food that must be consumed for reaching a content of fibre rich in arabinoxylans equal to 8 g with respect to 100 g, is generally less appetizing and contains so-called phytates which cannot be digested by human beings or non-ruminant animals, and which are generally considered anti-nutritive due to the chelating effect of other nutritive elements, preventing its absorption.

A further consideration to be made is that the insoluble part of wheat bran can be contaminated by mycotoxins which alter the immune and neurological system, cause oxidative stress and also damage to the intestinal barrier.

The technical problem underlying the present invention is thus that of making available a food flour which has the beneficial physiological effects associated to a flour having a high content of arabinoxylan-rich soluble fibres, such as the reduction of the postprandial glycemic response in normoglycemic subjects, its effects in the treatment of metabolic syndrome, in the reduction of cholesterol and in the treatment and/or prevention of type 2 diabetes, and which overcomes the drawbacks of the prior art.

The technical problem underlying the present invention is more in particular that of making available such a food flour, which does not give rise to disturbances such as swelling, bloating, irritation of the colon and consequent abdominal pain a which at the same time exhibits improved organoleptic characteristics.

With the expression "improved organoleptic characteristics" what is meant here is that the food flour of the invention, and hence the products produced therefrom, do not have the typical features of whole flour and wholemeal products, such as a dark colour and a "cardboard" and/or bitter taste.

### Summary of the Invention

The above technical problem has now been solved by a food flour or mixture of food flours comprising a quantity of soluble fibre rich in soluble pentosans among which arabinoxylans, ranging from 3 g to 4.5 g with respect to 100 g of the food flour or mixture of food flours, and wherein a quantity ranging from 0.09 g to 0.25 g (or, in other words, 2 to 8.3% (w/w)) of the soluble fibre has a molecular weight of the polysaccharide chains lower than 5 kDa.

Fibre rich in soluble pentosans, among which arabinoxylans, is made of heteropolysaccharides consisting predominantly of arabinose and xylose residues.

Preferably, the food flour or mixture of food flours is selected from wheat flour, rye flour, buckwheat flour, rice flour, barley flour, oatmeal, corn flour or combinations thereof, preferably wheat flour, more preferably soft wheat flour.

According to a preferred embodiment, therefore, the present invention refers to a food flour or mixture of food flours selected from wheat flour, rye flour, buckwheat flour, rice flour, barley flour, oatmeal, corn flour or combinations thereof, preferably wheat flour, more preferably soft wheat, characterized in that it comprises a quantity of soluble fibre rich in soluble pentosans among which arabinoxylans, ranging from 3 g to 4.5 g with respect to 100 g of flour or mixture of flours, preferably wheat flour, and in that a quantity ranging from 0.09 g to 0.25 g of the soluble fibre has a molecular size of the polysaccharide chains lower than 5 kDa.

The wheat flours, which are preferably of soft wheat, can be 0 and/or 00 flours (ash content <0.65%).

Hard wheat semolina, reground or not, is also used (ash <0.90%). Preferably, therefore, the wheat flour is hard wheat semolina, reground or not, more preferably having an ash content lower than 0.90%.

The soluble fibre is preferably present in the food flour or mixture of food flours of the invention in a quantity ranging from 3.2 to 3.5 g with respect to 100 g of flour or mixture of flours of preferably wheat, rye, buckwheat, rice, barley, oats and corn, more preferably wheat, even more preferably soft wheat, and the quantity of soluble fibre having a molecular weight of the polysaccharide chains lower than 5 kDa ranges from 0.09 g to 0.19 g (or, in other words 2.6 to 6% (w/w) of the soluble fibre).

Even more preferably, the quantity of immediately available soluble pentosans, among which arabinoxylans, present in the food flour or mixture of food flours of the invention, ranges from 0.43 g to 0.58 g per 100 g of flour or mixture of flours, preferably of wheat, rye, buckwheat, rice, barley, oats and corn, preferably wheat flour.

With the expression "immediately available soluble pentosans, among which arabinoxylans" what is meant here is the portion of the "soluble pentosans, among which arabinoxylans", which are not bound to insoluble fibre, and which is therefore easily absorbed by the intestine.

Traditional whole flour (ash content ranging from 1.3% to 1.7%) can supply up to 8 g of fibre (per 100 g of flour), of which 60% (4.8 g) can consist of pentosans. The bioavailable soluble pentosans, however, i.e. those which can be used by the human organism, in conventional traditional whole flour, are only in a quantity of 0.35 g - 0.41 g. The soluble pentosans immediately bioavailable present in 100 g of the flour or mixture of flours of the invention are 0.43 g - 0.58 g, therefore bioavailable to a greater extent with respect to traditional whole flour by 4.9% to 65.7% (DELTA: 0.02 g - 0.23 g), preferably higher than 35.3%. The mere presence of soluble pentosans, in fact, does not in itself guarantee physiological effectiveness, as the pentosans are only active, for example in the reduction action of glycemia, if they are bioavailable, and therefore if they are "separated" from the insoluble fraction of the fibre. In conventional soft wheat flour 00, the content of bioavailable pentosans is 0.15 g - 0.25 g (per 100 g of flour) . In the flour or mixture of flours of the invention, the immediately bioavailable soluble pentosans present are 0.43 g - 0.58 g, therefore bioavailable to a higher extent with respect to traditional soft wheat flour by 72% to 287% (DELTA: 0.18 g - 0.43 g), consequently preferably higher than 179.5%. The flour or mixtures of flours of the invention therefore represent a source of soluble fibre substantially free of lignin and cellulose and consequently they do not cause irritation phenomena of the colon with consequent bloating and abdominal pain and are characterized by the absence of the characteristic bitter taste typical of whole flours. Also, the flour or mixtures of flours and the products made from the flour or mixtures of flours of the present invention are comparatively light in colour and hardly distinguishable from their refined flour counterparts.

Furthermore, the flour or mixtures of flours of the invention contain ferulic acid in a quantity higher than 10% with respect to the quantity present in conventional whole flours. As said ferulic acid is present in a form separated from the structures of the wheat bran, the same is present in a more highly bioavailable form in the flour or mixtures of flours of the invention.

The content of bioavailable ferulic acid in the food flour or mixture of flours of the invention ranges from 0.200 mg to 0.250 mg and is preferably 0.236 mg with respect to 100 g, i.e. 10.3% higher with respect to traditional whole flour which contains 0.214 mg with respect to 100 g.

The flour or mixtures of flours, preferably wheat flour, of the invention as defined above, allow beneficial effects to be obtained on the postprandial glycemic response in normoglycemic subjects, as it lowers said postprandial glycemia by the ingestion of a much lower quantity of soluble fibre with respect to what is so far known in the art, thus overcoming drawbacks connected with the ingestion of a high quantity of food fibre. A positive influence of the flour or mixture of flour of the invention has also been found on the treatment of metabolic syndrome, in the reduction of cholesterol and in the treatment and/or prevention of type 2 diabetes, in particular the insulinemic response in overweight and obese normoglycemic subjects.

Without wishing to be bound by theory, it is thought that, once ingested, the immediately bioavailable soluble fibre that is unbound and/or characterized by a molecular weight lower than 5 kDa is bioavailable to a greater extent with respect to that commonly found in conventional wheat bran and flours and this provides the possibility of reducing the quantity of soluble fibre which must be consumed for obtaining the reduction effect of postprandial glycemia in normoglycemic subjects, in the treatment of metabolic syndrome, in the reduction of cholesterol and in the treatment and/or prevention of type 2 diabetes.

A further aspect of the present invention therefore relates to a food flour or mixture of food flours of preferably wheat, rye, buckwheat, rice, barley, oats and corn, more preferably wheat, even more preferably soft wheat, as defined above for use in reducing postprandial glycemia in normoglycemic subjects, in the treatment of metabolic syndrome, in the reduction of cholesterol and in the treatment and/or prevention of type 2 diabetes.

The flour or mixture of flours of the present invention can be obtained with the general method described in WO2009/016482.

The flour or mixture of flours of the present invention is obtained by a method that comprises the steps of:
a) enzymatic hydrolysis, preferably by means of enzymes of fungal origin, of an aqueous grain bran solution thus obtaining a soluble bioliquefied bran solution;
b) separation of the lignin fraction from the soluble bioliquefied bran solution of step a) thus obtaining a fractionated soluble bioliquefied bran solution;
c) kneading of the fractionated soluble bioliquefied bran solution with a refined flour, and forming of a dough mass;
d) dehydration and optionally grinding of the dough mass of step c) thus forming a dehydrated fractionated bran product; and
e) dosing and mixing of the dehydrated bran product in a refined flour.

More specifically bran, for example wheat bran, is obtained from the wheat grinding process, by means of sifting or sieving. The bran thus separated is mixed with tap water, preferably in a ratio within the range of 1:1-1:3, and a pasteurization process is initiated, preferably at a temperature ranging from 60° C to 100° C for 15-30 minutes. This operation serves for both reducing the bacterial contamination present in the bran which could interfere with the hydrolysis process and also for broadening the fibrous meshes in order to favour the subsequent enzymatic attack.

The enzymatic complexes, preferably hydrolytic enzymes of a fungal origin, are then added to the mixture. These enzymes are optimally active in the hydrolysis action at a controlled temperature ranging from 40°C to 55°C and at a pH of about 3.8, preferably for a time of 50-60 minutes. The above enzymatic complexes are necessary for obtaining the soluble bioliquified bran.

A separation phase is subsequently effected, preferably by means of filtration, in order to eliminate the lignin fraction (discarded) from the soluble fraction (soluble bioliquified product of interest). The soluble bioliquified product is then pasteurized (at the same conditions as described above) in order to stabilize it before kneading with a refined flour, for example with a low-power 0 type flour obtained from a mixture of Italian and European wheat, added in a ratio of 1:1 with respect to the bioliquified liquid product, whose function is simply to support the bioliquified liquid product, which comes into close contact with the flour, during the kneading phase.

The dough obtained is then fractionated ("broken") to form dough masses regular in weight and dimension. These dough masses are deep-frozen, preferably at a temperature of -20° C, and subjected to a dehydration process, by means of lyophilization or drying, to eliminate the water, obtaining "solid anhydrous flakes" of soluble bioliquified bran. A bioliquified bran, for example wheat bran, in powder form is obtained by grinding these flakes. Said bioliquified product in powder form is dosed in a conventional (or refined) flour of preferably wheat, rye, buckwheat, rice, barley, oats and corn, more preferably wheat, even more preferably soft wheat, and subsequently mixed to obtain the flour or mixture of food flours of the invention described above.

According to a further preferred aspect, said conventional (or refined) flour is obtained from the grinding process of wheat flour or a mixture of wheat flours, said flours being soft wheat flours 0 and/or 00 to which the extract is added

Said flours or mixture of flours of preferably wheat, rye, buckwheat, rice, barley, oats and corn, more preferably wheat, even more preferably soft wheat, is obtained from grains subjected to grinding processes and subsequent sifting in order to separate almost all of the outer integument and insoluble fibre contained therein, from the "mandorla amilifera", so that the residual content of insoluble fibre in flour, determined with standard methods (for example, those described in AOAC 991.43 - 1994) is less than 0.3% and so as to reach a quantity of ash lower than 0.70%, preferably lower than 0.65%, for soft wheat flours, and a quantity lower than 0.95% for buckwheat, rice, barley, oat, corn and rye flours. The function of grinding to which the caryopses are subjected, is to completely separate the bran part so that it is totally available for the enzymatic hydrolysis process, in order to allow the whole part of pentosans contained therein to be extracted from the bran and made totally bioavailable as it is separated.

The enzymatic hydrolysis techniques allow the molecular structures having a biological activity, i.e. phenols such as ferulic acid and arabinoxylans, to be preserved.

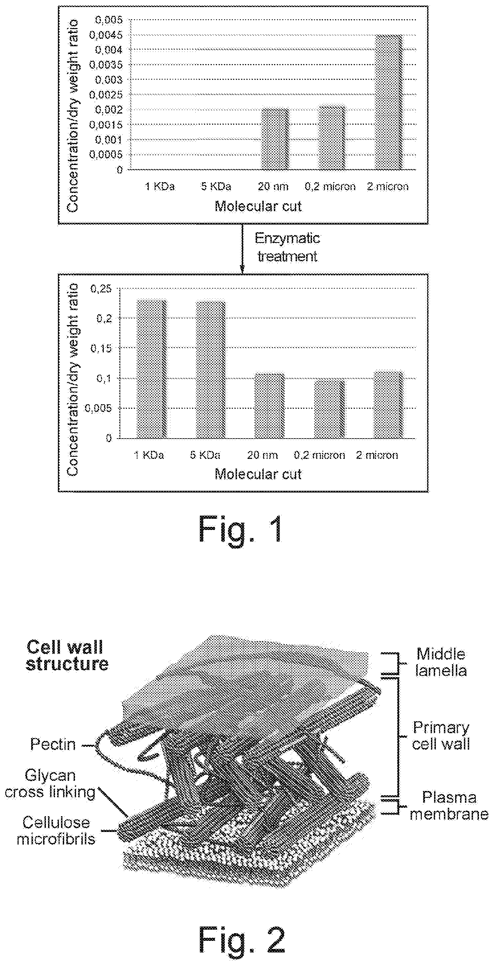

An evaluation of the molecular cuts obtained after enzymatic treatment has shown how the use of this particular enzymatic technique allows not only the "active" (or bioavailable) soluble molecules to be separated from the inactive insoluble matrix, but also the molecular dimensions of these active molecules to be reduced to molecular dimensions which can be easily usable and accessible within the organism. The digestion of a molecular complex having dimensions in the order of magnitude of a few microns is in fact slower and more difficult with respect to the digestion of molecules having dimensions in the order of magnitude of a few kilodaltons (KDa). Consequently, the technique used allows an extract of active (or bioavailable) fibre to be obtained in a molecular form which is even more bioavailable with respect to the common fibre extracts present on the market, by virtue of its smaller size. In this respect, reference should be made to the results indicated in Figure 1, which shows the molecular weight of the polysaccharide chains present in the flours before and after the enzymatic treatment.

The bran treated with the method described above provides all the pentosans present therein in a form not bound to the inert insoluble matrix consisting of cellulose and lignin, at the same time obtaining "useful" molecules in a reduced form from a dimensional point of view, as indicated in Figure 2.

The above detailed description of the method is applicable to other cereal grains by applying any adjustment to the parameters that will be obvious to the skilled person.

In a further aspect, the present invention therefore relates to the food flour or mixture of food flours obtained from the above-described method.

The quantity of bioavailable soluble pentosans in the mixtures of flours of the invention, i.e. in flours enriched with the soluble bran extract (soluble bioliquified product) is higher than traditional whole flour by 4.9% to 65.7% (DELTA: 0.02 g - 0.23 g), therefore preferably to an extent higher than 35.3%. This latter result relating to conventional whole flour is linked to the fact that although the pentosans are present in this flour in significant concentrations, they are present in a scarcely bioavailable form.

The bioliquified bran obtained through this technology is surprisingly effective.

According to a particularly preferred aspect of the invention, in fact, with the addition of 0.5 g of this extract of soluble fibre (bioliquified), to conventional (or refined) flour (100g), a total quantity of soluble fibre of 3.0 - 4.5 g is obtained, determined with standard methods (for example those described in AOAC 991.43 1994) thus allowing an additional supply of pentosans of 0.18 g - 0.43 g, of which 0.09 g - 0.25 g (or, in other words, 2 to 8.3% (w/w) of the soluble fibre) having molecular dimensions of the polysaccharide chains lower than 5 kDa of soluble pentosans.

### Brief description of the figures

The present invention is described for illustrative but non-limiting purposes according to its preferred embodiments also with the help of the enclosed figures, wherein:
- figure 1 shows how the molecular weight distribution of the polysaccharide chains of the soluble fibre changes after treatment with the enzymatic complex of the process used in the present invention. In the first figure, it can be seen how the molecular dimensions (or molecular weight) of the polysaccharide chains, before treatment with the process used, were higher than 5 kDa, whereas after treatment, the molecular dimensions of the polysaccharide chains drop to values lower than 5 kDa, thus further guaranteeing (or improving) the bioavailability of the pentosans contained in the soluble fibre;
- figure 2 shows the structure of bran;
- figure 3 shows the response of the plasma glucose after the ingestion of bread produced with a mixture of flours according to the invention and after the ingestion of bread produced with conventional refined flour of the 00 type;
- figure 4 shows the response in HOMA index in a test comparing the effects of the ingestion of toasted bread produced with a flour according to the invention and the ingestion of toasted bread produced with a conventional refined flour of the 00 type.

### Detailed description of the invention

The present invention is described for illustrative but non-limiting purposes according to its preferred embodiments by way of the following examples, but variations and/or modifications can obviously be applied by experts in the field, without being excluded from the relative protection scope, as defined by the enclosed claims.

### EXAMPLE 1

### Preparation of a wheat flour

A sample of 100 Kg of type 0 soft wheat was ground by a conventional method including sifting and sieving to obtain wheat bran. The bran was mixed with tap water, in a 1:2 ratio and the aqueous bran solution was pasteurized at a temperature of 80° C for 23 minutes. After cooling, hydrolytic enzymes of a fungal origin were then added to the solution and a hydrolysis reaction was carried out at 45°C at a pH of 3.8 for 55 minutes. At the end of the reaction, a soluble bioliquified bran solution was obtained.

A separation phase was then carried out by filtration, in order to remove the lignin fraction (which was discarded) from the soluble fraction (soluble bioliquified product of interest). The soluble bioliquified product was then pasteurized at the same conditions described above. The thus obtained solution was kneaded with a low-power 0 type flour obtained from a mixture of Italian and European wheat, by mixing the flour in a ratio of 1:1 with respect to the bioliquified product.

The dough thus obtained was then divided into regularly-shaped dough masses of similar weight and shape (100 g balls having a diameter of 10 cm). These dough masses were deep-frozen at -20° C, and subjected to lyophilization thus obtaining "solid anhydrous flakes" of the fractionated bran product, which were then ground to a powder. Said powdered product was then dosed at 0.5% (wt%) in a refined 00 wheat flour and subsequently mixed to obtain 1000 Kg of the flour of the invention.

The flour thus obtained had per 100 g a soluble fibre rich in soluble pentosans, among which arabinoxylans, content of 3.8 g, of which 0.12 g had a molecular weight of the polysaccharide chain lower than 5 KDa. The total amount of immediately available soluble fibre was 0.53 g.

The flour had a light colour and was hardly distinguishable from conventional refined wheat flour.

### EXAMPLE 2

### Clinical study on normoglycemic individuals

The following study was effected in order to evaluate the beneficial effects of the soluble fibre on the metabolism of carbohydrates.

In particular, the object was to compare the effect of a mixture of flours according to the invention on postprandial glycemia in normoglycemic subjects with respect to flour of the 00 type. The palatability of the product was also evaluated in subjects not accustomed to consuming products with a high fibre content.

24 normoglycemic subjects were examined (18 women and 6 men; average age 34.3 years), normal weight (BMI body mass index = 22.9 ± 2.10 kg/m²) and normoglycemic (84.92 ± 10.9 mg/dL). The weight, height, BMI, waist circumference of all the patients were measured and a brief personal and family history was effected and finally an evaluation of the lean mass and fat mass with the use of an impedance meter.

The subjects were then randomly divided into two groups (group 1 and group 2). A roll of 100 g containing 00 wheat flour was given to the subjects of group 1, who had been fasting for at least 4 hours, whereas a 100 g roll was given to the subjects of group 2, who had also been fasting for at least 4 hours, containing a mixture of wheat flours obtained from grains subjected to grinding and subsequent sifting processes, in order to separate almost all the outer integuments and insoluble fibre contained therein from the endosperm ("mandorla amilifera"), so that the residual insoluble fibre content in flour determined with standard methods (for example, those described in AOAC 991.43 - 1994) was lower than 0.3% and so as to reach a quantity of ash lower than 0.70%, to which powdered bioliquified bran (as described above) at 0.5% was added.

The bread roll according to the invention had a content of soluble fibre rich in pentosans, including arabinoxylans of 3.2 g per 100 g, of which 0.1 g had a molecular weight of the polysaccharide chain lower than 5 KDa. The amount of immediately bioavailable soluble pentosans was 0.45 g.

The conventional bread had a content of soluble fibre rich in pentosans, including arabinoxylans, of 1.7 g per 100 g, of molecular dimensions greater than 20 nm.

The experiment was set up to be double blind so that the subjects did not know the type of bread they would consume.

An evaluation of the glycemic values was effected for each subject with the use of a glucometer before eating the bread and 30 minutes after it had been ingested. The ingestion of the roll was accompanied by a modest amount of water (200-300 ml). After collecting the data, a questionnaire was completed in order to evaluate the palatability of the product and satiating capacity.

After a week, bread was again administered, applying however a "cross-over", i.e. bread containing the mixture of flours of the invention was administered to the subjects who had ingested bread containing wheat flour 00 in the first test, and viceversa. Experiments of this kind try to minimize the variability linked to the single subject (in practice, thanks to the cross-over, each patient has control of himself).

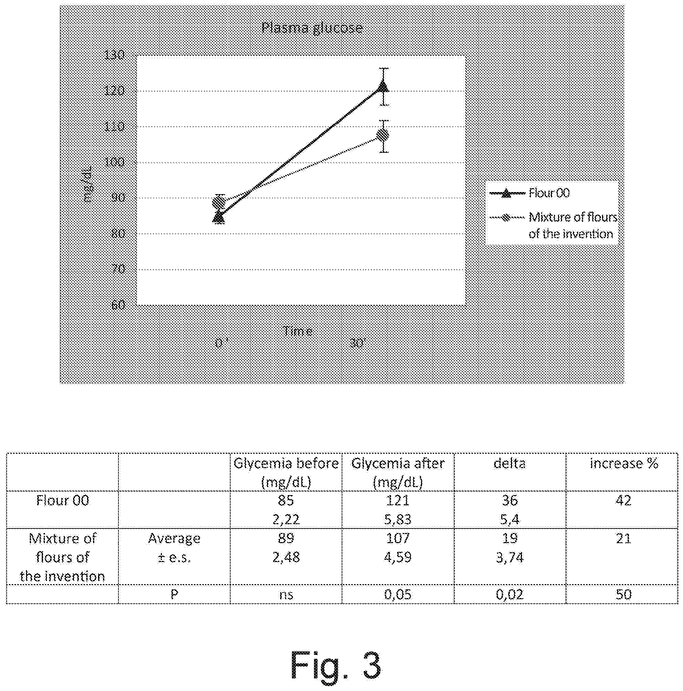

The results were expressed (see Figure 3) as average ± e.s. (standard error). A comparison of the data was effected by the application of the Student Test. A value of p≤0.05 was considered statistically significant. The analysis was carried out with Software MEDCALC Ver. 13.

Figure 3 indicates the plasma glucose response after the ingestion of bread containing the mixture of flours of the invention and after the ingestion of bread containing conventional 00 flour, respectively. The plasma glucose concentrations on an empty stomach did not differ in the two groups before the ingestion of bread. It was observed that 30 minutes after ingesting the bread, the plasma glucose concentrations increased with respect to the baseline values. The postprandial peaks of the glucose concentrations in the subjects that had consumed bread produced with the mixture of flours of the invention were much lower with respect to the values obtained with the control (P ≤0.05). In terms of palatability, almost all of the subjects proved to like the formulation of the bread without noting any difference between the two types of preparations.

It should be noted that the cooking of the soluble fibre during the production of bread does not alter the properties of the soluble fibre itself.

The ingestion of bread with a quantity of 3.2 g of soluble fibres with a high content of pentosans among which arabinoxylans significantly reduced the postprandial glycemia in the subjects during the study.

### EXAMPLE 3

### Clinical study on overweight and obese normoglycemic individuals

The following study was effected in order to evaluate the beneficial effects of the soluble fibre on the insulinemic response in overweight and obese normoglycemic individuals.

In particular, the objective was to compare the effect of a mixture of flours according to the invention on the HOMA index in overweight and obese normoglycemic subjects with respect to flour of the 00 type. The palatability of the product was also evaluated in subjects not accustomed to consuming products with a high fibre content, as per Example 2.

The HOMA (Homeostasis Model Assessment) index is a quantification of insulin resistance and is measured based on a mathematical model that considers fasting plasma glucose and insulin concentrations.

20 adult subjects (18 years of age or above) were examined; The subjects were overweight or obese (BMI body mass index > 27 kg/m²) and normoglycemic. The weight, height, BMI, waist circumference of all the subjects were measured, and a brief personal and family history was effected and finally an evaluation of the lean mass and fat mass with the use of an impedance meter.

The subjects were then randomly divided into two groups: group 1 and group 2.

The individuals in the two groups received either Treatment A or Treatment B, after which they were switched over and the test continued for another four weeks. Treatment A consisted in treatment with toasted bread made with the flour of the present invention. Treatment B consisted in treatment with toasted bread made with conventional white soft flour 00.

Treatments A and B consisted in an isocaloric diet with respect to a seven-day food diary that each individual was asked to fill in before the start of the test. All the complex carbohydrates under the regime of the treatments A and B were provided by the respective toasted breads of each treatment.

The individuals in both groups were asked to maintain their usual lifestyles, in particular in terms of fitness regime.

The toasted bread of Treatment A contained a mixture of wheat flours obtained from wheat grains subjected to grinding and subsequent sifting processes, in order to separate almost all the outer integuments and insoluble fibre contained therein from the endosperm ("mandorla amilifera"), so that the residual insoluble fibre content in flour determined with standard methods (for example, those described in AOAC 991.43 - 1994) was lower than 0.3% and so as to reach a quantity of ash lower than 0.70%, to which powdered bioliquified bran (as described above) at 0.5% was added.

The toasted bread according to the invention was made starting from bread that had a content of soluble fibre rich in pentosans, including arabinoxylans of 3.2 g per 100 g, of which 0.1 g had a molecular weight of the polysaccharide chain lower than 5 KDa. The amount of immediately bioavailable soluble pentosans was 0.45 g.

The toasted bread of Treatment B was made starting from conventional bread as that of Example 2.

The experiment was set up to be double blind so that the subjects did not know the type of bread they would consume.

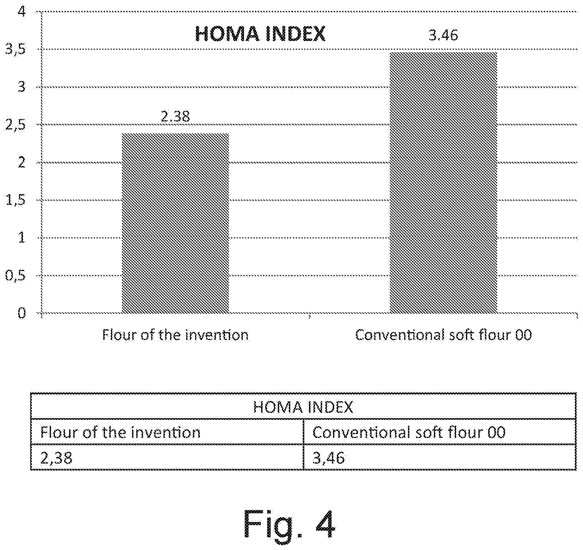

The results for HOMA index are expressed in Figure 4. A comparison of the data was effected by the application of the Student Test. A value of p≤0.05 was considered statistically significant. The analysis was carried out with Software MEDCALC Ver. 13.

Figure 4 indicates a fall in the HOMA index in the individuals undergoing Treatment A compared to individuals undergoing Treatment B.

In terms of palatability, almost all of the subjects proved to like the formulation of the toasted bread without noting any difference between the two types of toasted bread being administered.

It should be noted that the cooking or toasting of the soluble fibre during the production and toasting of bread does not alter the properties of the soluble fibre itself.

The ingestion of toasted bread obtained from a bread with a quantity of 3.2 g of soluble fibres with a high content of pentosans among which arabinoxylans has significant beneficial effects on the risk factors associated to insulin resistance.

In the case of both Examples 2 and Example 3, the patients reported that the bread had not given any disturbances such as swelling, bloating, irritation of the colon or abdominal pain, and that the bread had a taste that was undistinguishable from regular white bread.

## Claims

1. A food flour or mixture of food flours comprising a quantity of soluble fibre rich in soluble pentosans, among which arabinoxylans, ranging from 3 g to 4.5 g with respect to 100 g of said food flour or mixture of food flours, and wherein 2 to 8.3 % (w/w) of the soluble fibre has a molecular weight of the polysaccharide chains lower than 5 kDa.

2. The food flour or mixture of food flours of claim 1 selected from wheat flour, rye flour, buckwheat flour, rice flour, barley flour, oatmeal, corn flour or combinations thereof, preferably wheat flour, more preferably soft wheat flour.

3. The food flour or mixture of food flours according to claim 1 or 2, wherein the soluble fibre is present in a quantity ranging from 3.2 g to 3.5 g with respect to 100 g of said food flour or mixture of food flours.

4. The food flour or mixture of food flours according to any of the previous claims, wherein the quantity of soluble fibre having a molecular weight of the polysaccharide chains lower than 5 kDa ranges from 2.6 to 6% (w/w) of the total weight of the soluble fibre.

5. The food flour or mixture of food flours according to any of the previous claims, wherein the quantity of immediately available soluble pentosans, among which arabinoxylans, present in said food flour or mixtures of food flours ranges from 0.43 g to 0.58 g with respect to 100 g of the food flour or mixture of food flours.

6. The food flour or mixture of food flours according to any of the previous claims, wherein the quantity of bioavailable ferulic acid ranges from 0.200 mg to 0.250 mg and is preferably 0.236 mg with respect to 100 g.

7. A food flour or mixture of food flours as defined in claims 1-6, for use in the reduction of postprandial glycemia in normoglycemic subjects.

8. A food flour or mixture of food flours as defined in claims 1-6, for use in the treatment of metabolic syndrome.

9. A food flour or mixture of food flours as defined in claims 1-6, for use in the reduction of cholesterol.

10. A food flour or mixture of food flours as defined in claims 1-6, for use in the treatment and/or prevention of type 2 diabetes.

## Patentansprüche

1. Lebensmittelmehl oder Gemisch von Lebensmittelmehlen, umfassend eine Menge einer löslichen Faser, die reich an löslichen Pentosanen, zu denen Arabinoxylane zählen, ist, im Bereich von 3 g bis 4,5 g, bezogen auf 100 g des Lebensmittelmehls oder des Gemischs von Lebensmittelmehlen, und wobei 2 bis 8,3 (Gew.-)% der löslichen Faser ein Molekulargewicht der Polysaccharidketten von weniger als 5 kDa aufweisen.

2. Lebensmittelmehl oder Gemisch von Lebensmittelmehlen nach Anspruch 1, das aus Weizenmehl, Roggenmehl, Buchweizenmehl, Reismehl, Gerstenmehl, Hafermehl, Maismehl oder Kombinationen davon, vorzugsweise aus Weizenmehl, noch bevorzugter aus Weichweizenmehl, ausgewählt ist.

3. Lebensmittelmehl oder Gemisch von Lebensmittelmehlen nach Anspruch 1 oder 2, wobei die lösliche Faser in einer Menge im Bereich von 3,2 g bis 3,5 g, bezogen auf 100 g des Lebensmittelmehls oder Gemischs von Lebensmittelmehlen, vorhanden ist.

4. Lebensmittelmehl oder Gemisch von Lebensmittelmehlen nach einem der vorstehenden Ansprüche, wobei die Menge an löslicher Faser, die ein Molekulargewicht der Polysaccharidketten von weniger als 5 kDa aufweist, im Bereich von 2,6 bis 6 (Gew.-)% des Gesamtgewichts der löslichen Faser liegt.

5. Lebensmittelmehl oder Gemisch von Lebensmittelmehlen nach einem der vorstehenden Ansprüche, wobei die Menge an unmittelbar verfügbaren löslichen Pentosanen, zu denen Arabinoxylane zählen, die in dem Lebensmittelmehl oder dem Gemisch von Lebensmittelmehlen vorhanden ist, im Bereich von 0,43 g bis 0,58 g liegt, bezogen auf 100 g des Lebensmittelmehls oder des Gemischs von Lebensmittelmehlen.

6. Lebensmittelmehl oder Gemisch von Lebensmittelmehlen nach einem der vorstehenden Ansprüche, wobei die Menge von bioverfügbarer Ferulasäure, bezogen auf 100 g, im Bereich von 0,200 mg bis 0,250 mg liegt und vorzugsweise 0,236 mg beträgt.

7. Lebensmittelmehl oder Gemisch von Lebensmittelmehlen, wie in den Ansprüchen 1-6 definiert, zur Verwendung bei der Verringerung von postprandialer Glykämie in normoglykämischen Individuen.

8. Lebensmittelmehl oder Gemisch von Lebensmittelmehlen, wie in den Ansprüchen 1-6 definiert, zur Verwendung bei der Behandlung eines Stoffwechselsyndroms.

9. Lebensmittelmehl oder Gemisch von Lebensmittelmehlen, wie in den Ansprüchen 1-6 definiert, zur Verwendung bei der Reduktion von Cholesterin.

10. Lebensmittelmehl oder Gemisch von Lebensmittelmehlen, wie in den Ansprüchen 1-6 definiert, zur Verwendung bei der Behandlung und/oder Prävention von Typ-2-Diabetes.

## Revendications

1. Une farine alimentaire ou mélange de farines alimentaires comprenant une quantité de fibres solubles riches en pentosanes solubles, notamment arabinoxylanes, comprise entre 3 g et 4,5 g par rapport à 100 g de ladite farine alimentaire ou du mélange de farines alimentaires, et dans laquelle de 2 à 8,3 % (p/p) de la fibre soluble a un poids moléculaire des chaînes de polysaccharides inférieur à 5 kDa.

2. La farine alimentaire ou mélange de farines alimentaires selon la revendication 1 sélectionnée parmi la farine de blé, la farine de seigle, la farine de sarrasin, la farine de riz, la farine d'orge, la farine d'avoine, la farine de maïs ou combinations de celles-ci, préférablement la farine de blé, plus préférablement la farine de blé tendre.

3. La farine alimentaire ou mélange de farines alimentaires selon la revendication 1 ou 2, dans laquelle la fibre soluble est présente dans une quantité comprise entre 3,2 g et 3,5 g par rapport à 100 g de ladite farine alimentaire ou mélange de farines alimentaires.

4. La farine alimentaire ou mélange de farines alimentaires selon l'une quelconque des revendications précédentes, dans laquelle la quantité de fibre soluble ayant un poids moléculaire des chaînes de polysaccharides inférieur à 5 kDa est comprise entre 2,6 et 6% (p/p) du poids total de la fibre soluble.

5. La farine alimentaire ou mélange de farines alimentaires selon l'une quelconque des revendications précédentes, dans laquelle la quantité de pentosanes solubles immédiatement disponibles, notamment arabinoxylanes, présents dans ladite farine alimentaire ou mélanges de farines alimentaires est comprise entre 0,43 g et 0,58 g par rapport à 100 g de la farine alimentaire ou mélange de farines alimentaires.

6. La farine alimentaire ou mélange de farines alimentaires selon l'une quelconque des revendications précédentes, dans laquelle la quantité d'acide férulique biodisponible est comprise entre 0,200 mg et 0,250 mg et elle est préférablement 0,236 mg par rapport à 100 g.

7. Une farine alimentaire ou mélange de farines alimentaires telle que définie dans les revendications 1-6, pour l'utilisation dans la réduction de la glycémie postprandiale chez les sujets normoglycémiques.

8. Une farine alimentaire ou mélange de farines alimentaires telle que définie dans les revendications 1-6, pour l'utilisation dans le traitement du syndrome métabolique.

9. Une farine alimentaire ou mélange de farines alimentaires telle que définie dans les revendications 1-6, pour l'utilisation dans la réduction du cholestérol.

10. Une farine alimentaire ou mélange de farines alimentaires telle que définie dans les revendications 1-6, pour l'utilisation dans le traitement et/ou la prévention du diabète de type 2.
